(19)

Europäisches
Patentamt
European
Patent Office
Office européen
des brevets

(11)  **EP 4 462 907 A1**

(12)  **EUROPEAN PATENT APPLICATION**
published in accordance with Art. 153(4) EPC

(43) Date of publication:
**13.11.2024 Bulletin 2024/46**

(21) Application number: **22921403.6**

(22) Date of filing: **22.06.2022**

(51) International Patent Classification (IPC):
**H04W 72/04** (2023.01)

(52) Cooperative Patent Classification (CPC):
**H04W 72/04; H04W 72/12; H04W 72/121;
H04W 72/1263; H04W 72/51;** Y02D 30/70

(86) International application number:
**PCT/CN2022/100526**

(87) International publication number:
**WO 2023/137972 (27.07.2023 Gazette 2023/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.01.2022 CN 202210062080**

(71) Applicant: **ZTE Corporation
Shenzhen, Guangdong 518057 (CN)**

(72) Inventors:
• **LIU, Wenfeng
Shenzhen, Guangdong 518057 (CN)**
• **DAI, Bo
Shenzhen, Guangdong 518057 (CN)**
• **HU, Youjun
Shenzhen, Guangdong 518057 (CN)**
• **CHEN, Mengzhu
Shenzhen, Guangdong 518057 (CN)**

(74) Representative: **Vossius & Partner
Patentanwälte Rechtsanwälte mbB
Siebertstraße 3
81675 München (DE)**

(54)  **RESOURCE CONFIGURATION METHOD, ELECTRONIC DEVICE AND STORAGE MEDIUM**

(57)  Embodiments of the present application provide a resource configuration method, an electronic device and a storage medium. The method comprises: determining edge position information of a PUCCH resource according to a base station signaling; determining a common PUCCH resource set in a PUCCH resource set configuration table according to the edge position information and an SIB message; and determining the PUCCH resource according to the edge position information and a physical resource block offset that corresponds to the common PUCCH resource set.

| Determine edge position information of a PUCCH resource according to a base station signaling | 110 |
| Determine a common PUCCH resource set in a PUCCH resource set configuration table according to the edge position information and an SIB message | 120 |
| Determine the PUCCH resource according to the edge position information and a physical resource block offset that corresponds to the common PUCCH resource set | 130 |

**FIG. 1**

## Description

### CROSS REFERENCE TO RELATED APPLICATIONS

The present disclosure claims a priority right to the Chinese patent application No. 202210062080.8 filed on January 19, 2022 with the Chinses Patent Office, the entire disclosure of which is hereby incorporated by reference in its entirety.

### FIELD

The present disclosure relates to the technical field of wireless communications, and particularly to a resource configuration method, an electronic device and a storage medium.

### BACKGROUND

Reduced Capability (RedCap) is a new Internet of Things technology developed by the 3GPP standard organization, mainly aims at middle-end Internet of Things devices such as industrial wireless sensors, video monitoring and wearable devices, etc., and have characteristics such as low complexity, low cost, low power consumption and compact size. As compared with 5G enhanced mobile broadband eMBB and ultra-high reliable low-latency communication uRLLC technology, RedCap performs simplification in aspects such as Bandwidth Part (BWP), the number of antennas, the number of Multiple Input Multiple Output (MIMO) layers and the modulation order, and realizes a compromise between cost and performance.

RedCap technology needs to achieve a minimum impact on network performance under the premise of meeting requirements of use cases. In the FR1 frequency band, a maximum supported bandwidth of the conventional NR user equipment (UE) is 100M. In order to achieve the reduction of complexity and cost, the maximum supported bandwidth of the RedCap UE is reduced to 20M; since the RedCap UE and the conventional NR UE share the public network, the Physical Uplink Control Channel (PUCCH) resources of the RedCap UE located at both sides of the bandwidth divide the Physical Uplink Share Channel (PUSCH) resources of the conventional NR UE into a plurality of sub-parts, thereby causing the problem of the PUSCH resource fragmentation, and thereby causing a reduction of the uplink peak data rate of the conventional NR UE in the public network. At present, it is decided at a 3GPP standard conference to disable the RedCap PUCCH frequency hopping in the initial access phase. Specifically, the PUCCH frequency hopping of the RedCap UE is enabled or disabled by newly adding SIB signaling, and the disabling of the PUCCH frequency hopping enables the PUCCH resources of the RedCap UE to be concentrated on one side of the bandwidth, thereby reducing the problem of the PUSCH resource fragmentation.

In the licensed spectrum, the conventional NR UE transmits PUCCH resources by default using frequency hopping in the initial access phase to achieve greater uplink coverage and better transmission performance. However, when SIB signaling indicates to disable frequency hopping of a RedCap UE, the RedCap UE transmits a PUCCH in a non-frequency hopping manner; at this time, the conventional PUCCH resource configuration method for a conventional NR UE cannot be directly applied to the RedCap UE. Furthermore, in order to ensure that the multi-user multiplexing capability is unchanged, each PUCCH resource set configured for the RedCap UE should also comprise 16 PUCCH resources. In addition, when a UE based on PUCCH frequency hopping transmission and a UE based on PUCCH non-frequency hopping transmission are multiplexed on the same resource block to transmit PUCCH, the non-orthogonality of transmission sequences makes it impossible for the two types of UEs to achieve code division multiplexing, thereby reducing network capacity.

### SUMMARY

A main object of embodiments of the present disclosure is to provide a resource configuration method, an electronic device and a storage medium.

Embodiment of the present disclosure provide a resource configuration method, wherein the method comprises: determining edge position information of a PUCCH resource according to base station signaling; determining a common PUCCH resource set in a PUCCH resource set configuration table according to the edge position information and an SIB message; and determining the PUCCH resource according to the edge position information and a physical resource block offset that corresponds to the common PUCCH resource set.

Embodiment of the present disclosure further provide an electronic device, wherein the electronic device comprises: one or more processors; a memory for storing one or more programs; the one or more programs, when executed by the one or more processors, cause the one or more processors to implement the above resource configuration method according to embodiments of the present disclosure.

Embodiments of the present disclosure further provide a computer-readable storage medium having one or more programs stored thereon for execution by the one or more processors to perform the above resource configuration method according to embodiments of the present disclosure.

**BRIEF DESCRIPTION OF THE DRAWINGS**

FIG. 1 is a flow chart of a resource configuration method according to an embodiment of the present disclosure;

FIG. 2 is a flow chart of another resource configuration method according to an embodiment of the present disclosure;

FIG. 3 is a schematic structural diagram of a resource configuration apparatus according to an embodiment of the present disclosure;

FIG. 4 is a schematic configuration diagram of an electronic device according to an embodiment of the present disclosure.

**DETAILED DESCRIPTION**

It should be appreciated that specific embodiments described herein are only used to illustrate the present disclosure and not to limit the present disclosure.

In the following depictions, suffixes such as "module", "component", or "unit" representing elements are used merely to facilitate description of the present disclosure and they themselves do not have specific meaning. Therefore, "modules", "component", or "unit" may be used in a mixed manner.

In embodiments of the present disclosure, the RedCap UE and the conventional NR UE share a public network, the PUCCH resources of the RedCap UE located at both sides of the bandwidth divide the PUSCH resources of the conventional NR UE into a plurality of sub-parts, thereby causing the problem of the PUSCH resource fragmentation, and reducing the uplink peak data rate of the conventional NR UE. The following table is Table 2.1 showing the configuration of a common PUCCH resource set used by the conventional NR UE in the initial access phase:

| Index | PUCCH format | First symbol | Number of symbols | PRB offset $RB_{\mathrm{BWP}}^{\mathrm{offset}}$ | Set of initial CS indexes |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | | {0, 3, 6, 9} |

In the licensed spectrum, a conventional NR UE transmits PUCCH resources by default using frequency hopping in the initial access phase, to achieve a greater uplink coverage scope and a better transmission performance. Specifically, based on Table 2.1 showing the configuration of a common PUCCH resource set commonly maintained by a base station and a UE, the conventional NR UE firstly determines a common PUCCH resource set (each PUCCH resource set comprises 16 PUCCH resources) according to a PUCCH resource configuration index notified by SIB1, and then determines a PUCCH resource with an index $r_{\text{PUCCH}}$, $0 \le r_{\text{PUCCH}} \le 15$ in the common PUCCH resource set by means of combining DCI and CCE. For each PUCCH resource index $r_{\text{PUCCH}}$, the corresponding frequency domain position and initial cyclic shift of the PUCCH transmission are configured as follows:

When $\lfloor r_{\text{PUCCH}}/8 \rfloor = 0$, the PRB index of the conventional NR UE PUCCH transmission in the first hop is $RB_{\text{BWP}}^{\text{offset}} + \lfloor r_{\text{PUCCH}}/N_{\text{CS}} \rfloor$, the PRB index in the second hop is $N_{\text{BWP}}^{\text{size}} - 1 - RB_{\text{BWP}}^{\text{offset}} - \lfloor r_{\text{PUCCH}}/N_{\text{CS}} \rfloor$, and the initial cyclic shift index in the set of initial cyclic shift indexes is $r_{\text{PUCCH}} \bmod N_{\text{CS}}$;

When $\lfloor r_{\text{PUCCH}}/8 \rfloor = 1$, the PRB index of the conventional NR UE PUCCH transmission in the first hop is $N_{\text{BWP}}^{\text{size}} - 1 - RB_{\text{BWP}}^{\text{offset}} - \lfloor (r_{\text{PUCCH}} - 8)/N_{\text{CS}} \rfloor$, the PRB index in the second hop is $RB_{\text{BWP}}^{\text{offset}} + \lfloor (r_{\text{PUCCH}} - 8)/N_{\text{CS}} \rfloor$, and the initial cyclic shift index in the set of initial cyclic shift indexes is $(r_{\text{PUCCH}} - 8) \bmod N_{\text{CS}}$;

Wherein the PRB is used for describing a relative position of a resource block in actual transmission, $N_{\text{BWP}}^{\text{size}}$ represents the number of PRBs of an initial uplink BWP configured to a RedCap UE, $RB_{\text{BWP}}^{\text{offset}}$ represents a PRB offset defined in Table 2.1, $N_{\text{CS}}$ represents a total number of initial cyclic shift indexes in the set of initial cyclic shift indexes, $\lfloor \ \rfloor$ represents rounding down, and mod represents a modulo operation.

When the SIB signaling indicates to disable the PUCCH frequency hopping, the RedCap UE transmits the PUCCH in a non-frequency hopping manner, and at this time, the above-mentioned PUCCH resource configuration method for the conventional NR UE cannot be directly applied to the RedCap UE. Furthermore, in order to ensure that the multi-user multiplexing capability remains unchanged, each PUCCH resource set configured to a RedCap UE should also include 16 PUCCH resources. In addition, when an UE based on PUCCH frequency hopping transmission and an UE based on PUCCH non-frequency hopping transmission are multiplexed on the same resource block to transmit PUCCH, the non-orthogonality of transmission sequences makes it impossible for the two types of UEs to achieve code division multiplexing, thereby reducing network capacity.

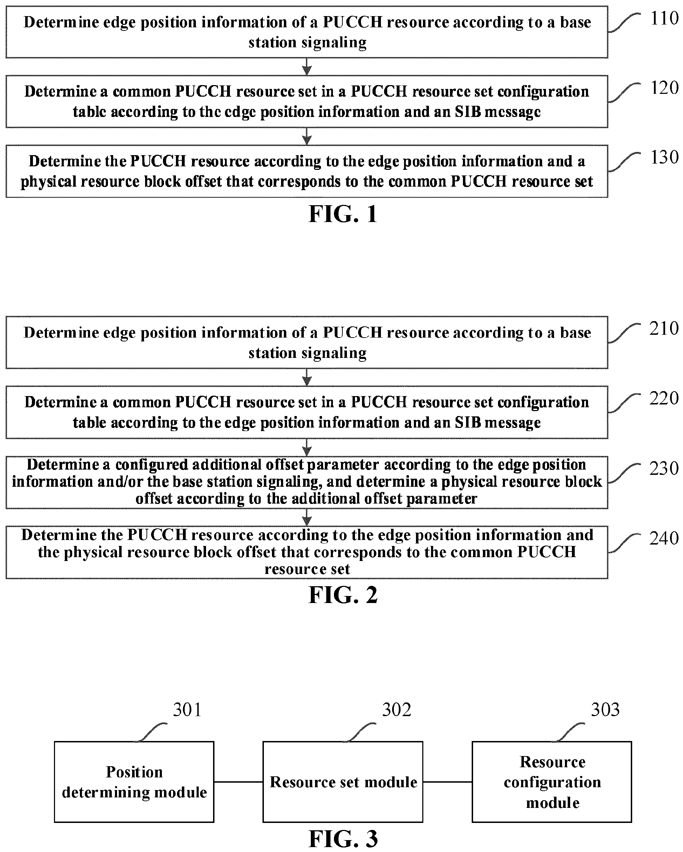

FIG. 1 is a flow chart of a resource configuration method according to an embodiment of the present disclosure. The embodiments of the present disclosure may be applicable for the case of RedCap-UEs transmission resource configuration; the method may be executed by a resource configuration apparatus, and the apparatus may be realized by means of software and/or hardware, and is generally integrated in a RedCap UE; with reference to FIG. 1, the method according to the embodiment of the present disclosure specifically comprises the following steps:

Step 110: determining edge position information of a PUCCH resource according to base station signaling.

The edge position information may be a position of the PUCCH resource used by the RedCap UE in a Bandwidth Part (BWP), and the edge position information may indicate an upper edge, a lower edge, both side edges of the uplink BWP, or the upper edge, the lower edge of the uplink BWP, or a certain side of the uplink BWP, both sides of the uplink BWP.

In an embodiment of the present disclosure, a RedCap UE may determine the edge position information of the used PUCCH resource according to the base station signaling, and may determine the position of the PUCCH resource in the uplink BWP according to the base station signaling, for example, the position may be an upper edge, a lower edge, both side edges of the uplink BWP, or the upper edge, the lower edge of the uplink BWP, or a certain side of the uplink BWP, both sides of the uplink BWP.

Step S 120: determining a common PUCCH resource set in a PUCCH resource set configuration table according to the edge position information and an SIB message.

Specifically, the RedCap UE may determine a common PUCCH resource set in the PUCCH resource set configuration table using both the determined edge position information and a System Information Block (SIB) message, wherein the PUCCH resource set configuration table may be jointly maintained by the RedCap UE and the base station.

Step 130: determining the PUCCH resource according to the edge position information and a physical resource block offset that corresponds to the common PUCCH resource set

In an embodiment of the present disclosure, the physical resource block offset configured in a common PUCCH resource set may be determined, and the position of a PUCCH resource used by a RedCap UE may be determined according to the physical resource block offset and the edge position information, for example, parameters such as a frequency domain position of the PUCCH resource used by the RedCap UE and an initial cyclic shift configuration may be determined.

In the embodiment of the present disclosure, edge position information of the PUCCH resource is determined according to base station signaling; the common PUCCH resource set in the PUCCH resource set configuration table is determined by using the edge position information and the SIB message; the PUCCH resource is determined using the edge position information and the physical resource block offset corresponding to the common PUCCH resource set, so as to realize PUCCH resource configuration of the RedCap UE, reduce the impact on the performance of the public network, and improve network capacity.

Furthermore, on the basis of the embodiment of the present disclosure, the base station signaling comprises at least one of the following: a remaining minimum system information SIB 1, downlink control information DCI, and other system information.

In the embodiment of the present disclosure, the position of the PUCCH resource used by the RedCap UE in the uplink BWP may be indicated through the remaining minimum system information SIB 1 or Downlink Control Channel (DCI). It may be understood that the edge position information of the PUCCH resource may also be indicated using other system information sent by base stations to the RedCap UE.

Furthermore, on the basis of the embodiment of the present disclosure, the edge position information comprises at least one of the following cases: an upper edge of the uplink BWP, a lower edge of the uplink BWP, both sides of the uplink BWP, or the upper edge of the uplink BWP, the lower edge of the uplink BWP, or one side of the uplink BWP, the both sides of the uplink BWP.

In the embodiments of the present disclosure, the edge position information may indicate that the PUCCH is located at the upper edge, the lower edge, both side edges of the uplink BWP, or the upper edge, the lower edge of the uplink BWP, or one side of the uplink BWP, both sides of the uplink BWP, etc.

Furthermore, on the basis of the embodiment of the present disclosure, the PUCCH resource set configuration table comprises at least one of the following: a common PUCCH resource set configuration table of a conventional NR UE, or a dedicated PUCCH resource set configuration table.

Specifically, the PUCCH resource set configuration table may be a common PUCCH resource set configuration table of the conventional NR UE, that is to say, the RedCap UE may share the same PUCCH resource set configuration table with the conventional NR UE. Alternatively, the RedCap UE may maintain a separate dedicated PUCCH resource set configuration table that may differ in all or part of its content from the common resource set configuration table of the conventional NR UE.

Furthermore, on the basis of the embodiment of the present disclosure, the physical resource block offset included in the dedicated PUCCH resource set configuration table is in a linear relationship with the physical resource block offset of the common PUCCH resource set configuration table of the conventional NR UE.

In the embodiment of the present disclosure, a value of the Physical Resource Block offset (PRB offset) in the dedicated PUCCH resource set configuration table may be in a linear relationship to the value of the physical resource block offset included in the common PUCCH resource set configuration table of the conventional NR UE. The physical resource block offset in the dedicated PUCCH resource set configuration table may be obtained by performing a linear transformation on the physical resource block offset of the common PUCCH resource set configuration table of the conventional NR UE, for example, a multiplication operation or an addition operation may be performed on the physical resource block offset of the common PUCCH resource set configuration table of the conventional NR UE, and an operation result may be taken as the physical resource block offset in the dedicated PUCCH resource set configuration table; it may be understood that a transformation parameter used in the linear transformation process may be an indication value or a pre-set value. Furthermore, it may be understood that respective linear relationships between the plurality of physical resource block offsets included in the dedicated PUCCH resource set configuration table and the plurality of physical resource block offsets in the common PUCCH resource set configuration table of the conventional NR UE may be different, for example, the physical resource block offsets with the indexes 0 to 14 in the dedicated PUCCH resource set configuration table may be in a multiplicative linear relationship with the physical resource block offsets with the indexes 0 to 14 in the common PUCCH resource set configuration table of the conventional NR UE; in addition, the physical resource block offset with the index 15 in the dedicated PUCCH resource set configuration table may be in an additive linear relationship with the physical resource block offset with the index 15 in the common PUCCH resource set configuration table of the conventional NR UE.

FIG. 2 is a flow chart of another resource configuration method according to an embodiment of the present disclosure. The embodiment of the present disclosure is embodied on the basis of the above embodiment of the present disclosure. With reference to FIG. 2, the method provided by the embodiment of the present disclosure specifically comprises the following steps:

Step 210: determining edge position information of a PUCCH resource according to base station signaling.

Step 220: determining a common PUCCH resource set in a PUCCH resource set configuration table according to the edge position information and an SIB message.

Step 230: determining a configured additional offset parameter according to the edge position information and/or the base station signaling, and determining a physical resource block offset according to the additional offset parameter.

The additional offset parameter may be a further offset of the RedCap UE based on the physical resource block offset used by the conventional NR UE, and the additional offset parameter may be used for performing a linear operation with the physical resource block offset in the PUCCH resource set configuration table of the conventional NR UE.

In an embodiment of the present disclosure, whether an additional offset parameter is configured may be determined according to the edge position information and/or base station signaling; after it is determined that the additional offset parameter is configured, the additional offset parameter may be used for determining the physical resource block offset used by a RedCap UE, and may be used for performing a linear operation on the physical resource block offset included in the common PUCCH resource set; the determination process may be taking a result of performing a linear operation on the physical resource block offset in the common PUCCH resource set and the additional offset parameter as the physical resource block offset used by the RedCap UE, for example, taking a sum or product of the physical resource block offset included in the common PUCCH resource set and the additional offset parameter, as a new physical resource block offset.

Step 240: determining the PUCCH resource according to the edge position information and the physical resource block offset that corresponds to the common PUCCH resource set.

Furthermore, on the basis of the embodiment of the present disclosure, the additional offset parameter is configured by a system information block (SIB) message or downlink control information (DCI), the additional offset parameter adjusts said physical resource block offset based on an addition operation or a multiplication operation, and the number of bits occupied by the additional offset parameter comprises at least one of: 1 bit, 2 bits or 3 bits.

Specifically, the additional offset parameter used by the RedCap UE may be configured by the SIB message or downlink control information (DCI), the additional offset parameter may be used for performing a multiplication operation or an addition operation with the physical resource block (PRB), an operation result may be used as a physical resource block offset used by the RedCap, and the additional offset parameter may occupy 1 bit, 2 bits or 3 bits.

Furthermore, on the basis of the embodiment of the present disclosure, OFDM symbols of the PUCCH resource comprise at least two parts, and a value of a frequency hopping index parameter of a PUCCH transmission sequence corresponding to the OFDM symbol of each of the parts comprises: 0, 1 or a signaling indication value.

In an embodiment of the present disclosure, an Orthogonal Frequency Division Multiplexing (OFDM) symbol occupied by the PUCCH resource configured to RedCap may comprise at least two parts, a value of a frequency hopping index parameter of a PUCCH transmission sequence corresponding to an OFDM symbol of each part may be 0, 1 or a signaling indication value, and whether the PUCCH transmission sequence performs frequency hopping may be indicated by the value of the frequency hopping index parameter.

Furthermore, on the basis of the embodiment of the present disclosure, the OFDM symbols of the PUCCH resource comprise at least two parts, and a value of an initial cyclic shift index of a PUCCH transmission sequence corresponding to the OFDM symbol of each of said parts comprises: $r_{PUCCH} \bmod N_{CS}$, $(r_{PUCCH} - 8) \bmod N_{CS}$ or a signaling indication value, wherein $r_{PUCCH} = \left\lfloor \frac{2 \cdot n_{CCE,0}}{N_{CCE}} \right\rfloor + 2 \cdot \Delta_{PRI}$, $N_{CCE}$ is the number of control channel elements CCEs contained in the PDCCH resource set, $n_{CCE,0}$ is the index of a first control channel element CCE for the PDCCH reception, $\Delta_{PRI}$ is a value of the PUCCH resource indicator field in the DCI, and $N_{CS}$ is the total number of initial cyclic shift indexes in the set of initial cyclic shift indexes.

In an embodiment of the present disclosure, an Orthogonal Frequency Division Multiplexing (OFDM) symbol occupied by the PUCCH resource configured by RedCap may comprise at least two parts, a frequency hopping index parameter of a PUCCH transmission sequence corresponding to the OFDM symbol of each part may be $r_{PUCCH} \bmod N_{CS}$, $(r_{PUCCH} - 8) \bmod N_{CS}$ or a signaling indication value, and whether the PUCCH transmission sequence performs frequency hopping may be indicated by the value of the frequency hopping index parameter.

Furthermore, on the basis of the embodiment of the present disclosure, the PUCCH resource comprises at least one of the following: a common PUCCH resource, a PUCCH resource corresponding to an MSG4 message, and a PUCCH resource corresponding to an MSGB message.

In one exemplary embodiment, the RedCap UE and the conventional NR UE use the same common PUCCH resource set configuration Table 2.1 to configure the resources. The RedCap UE determines a common PUCCH resource set according to a PUCCH resource configuration index notified by the SIB1 message, wherein each PUCCH resource set comprises 16 PUCCH resources, and a PUCCH resource with an index $r_{PUCCH}$ is determined from the common PUCCH resource set by means of combining DCI and CCE, wherein $r_{\text{PUCCH}} = \left\lceil \dfrac{2 \cdot n_{\text{CCE,0}}}{N_{\text{CCE}}} \right\rceil + 2 \cdot \Delta_{\text{PRI}}$, $N_{CCE}$ is the number of Control Channel Elements (CCE) contained in the PDCCH CORESET, $n_{CCE,0}$ is the index of a first CCE for the PDCCH reception, and $\Delta_{PRI}$ is a value of the PUCCH resource indicator field in the DCI.

Furthermore, a new field Additional_PRBoffset may be defined in the SIB or DCI, the field may represent an additional offset parameter, the RedCap UE uses the common PUCCH resource set configuration Table 2.1 of the conventional NR UE by default when the field Additional_PRBoffset is not configured.

Furthermore, when the field Additional_PRBoffset is configured and occupies 1 bit, a value P thereof is selected from the set {4, 6} or {0, 4} or {0, 6} or {4, 2} or {6, 2} or {4, -2} or {6, -2}; when the field Additional_PRBoffset is configured and occupies 2 bits, its value P is selected from the set {4, 6, 0, -2} or {4, 6, 2, -2} or {4, 6, 0, 2}. A case in which P takes a negative number is only with respect to the PUCCH resource set with the index 15 in Table 2.1, which means reducing the original PRB offset rather than newly adding an additional PRB offset. Alternatively, when the field Additional_PRBoffset is configured and occupies 1 bit, its value P is fixed to a constant that is greater than zero.

Furthermore, on the basis of the embodiment of the present disclosure, the base station enables the PUCCH resource of the RedCap UE to be located on both sides of the uplink BWP by scheduling. Specifically, when $\lfloor r_{\text{PUCCH}}/8 \rfloor = 0$, a PRB index of the RedCap UE PUCCH transmission is $RB_{\text{BWP}}^{\text{offset}'} + \lfloor r_{\text{PUCCH}}/N_{CS} \rfloor$, and the initial cyclic shift index in the set of initial cyclic shift indexes is $r_{PUCCH} \bmod N_{CS}$; when $\lfloor r_{\text{PUCCH}}/8 \rfloor = 1$, the PRB index of the RedCap UE PUCCH transmission is $N_{\text{BWP}}^{\text{size}} - 1 - RB_{\text{BWP}}^{\text{offset}'} - \lfloor (r_{\text{PUCCH}} - 8)/N_{CS} \rfloor$, and the initial cyclic shift index in the set of initial cyclic shift indexes is $(r_{PUCCH}-8) \bmod N_{CS}$. When the field Additional PRBoffset is not configured, $RB_{\text{BWP}}^{\text{offset}'}$ is equal to the PRB offset $RB_{\text{BWP}}^{\text{offset}}$ configured in Table 2.1; when the field Additional_PRBoffset is configured, $RB_{BWP}^{offset'} = RB_{BWP}^{offset} + \rho$ or $RB_{BWP}^{offset'} = RB_{BWP}^{offset} \cdot \rho$, where $\rho$ is a value of the configured Additional_PRBoffset, and $RB_{\text{BWP}}^{\text{offset}}$ is the PRB offset configured in Table 2.1.

Furthermore, on the basis of the embodiment of the present disclosure, the base station indicates through SIB or DCI signaling that the PUCCH resource of the RedCap UE is located at the lower edge of the uplink BWP, and then the RedCap UE determines a specific position of the PUCCH resource according to the indication of the signaling. Specifically, when $\lfloor r_{\text{PUCCH}}/8 \rfloor = 0$, an PRB index of the RedCap UE PUCCH transmission is $RB_{\text{BWP}}^{\text{offset}'} + \lfloor r_{\text{PUCCH}}/N_{CS} \rfloor$, and the initial cyclic shift index in the set of initial cyclic shift indexes is $r_{PUCCH} \bmod N_{CS}$; when $\lfloor r_{\text{PUCCH}}/8 \rfloor = 1$, the PRB index of the RedCap UE PUCCH transmission is $RB_{\text{BWP}}^{\text{offset}'} + \lfloor (r_{\text{PUCCH}} - 8)/N_{CS} \rfloor$, and the initial cyclic shift index in the set of initial cyclic shift indexes is $(r_{PUCCH}-8) \bmod N_{CS}$.

Furthermore, on the basis of the embodiment of the present disclosure, the base station indicates through SIB or DCI signaling that the PUCCH resource of the RedCap UE is located at the upper edge of the uplink BWP, and then the RedCap UE determines a specific position of the PUCCH resource according to the indication of the signaling. Specifically, when $\lfloor r_{\text{PUCCH}}/8 \rfloor = 0$, an PRB index of the RedCap UE PUCCH transmission is $N_{\text{BWP}}^{\text{size}} - 1 - RB_{\text{BWP}}^{\text{offset}'} - \lfloor r_{\text{PUCCH}}/N_{CS} \rfloor$, and the initial cyclic shift index in the set of initial cyclic shift indexes is $r_{PUCCH} \bmod N_{CS}$; when $\lfloor r_{\text{PUCCH}}/8 \rfloor = 1$, the PRB index of the RedCap UE PUCCH transmission is $N_{\text{BWP}}^{\text{size}} - 1 - RB_{\text{BWP}}^{\text{offset}'} - \lfloor (r_{\text{PUCCH}} - 8)/N_{CS} \rfloor$, and the initial cyclic shift index in the set of initial cyclic shift indexes is $(r_{PUCCH}-8) \bmod N_{CS}$.

Furthermore, on the basis of the embodiment of the present disclosure, the PUCCH resources of the RedCap UE are configured on both sides of the uplink BWP with a certain offset, and 8 PUCCH resources are distributed on each side. As compared with the PUCCH resource configuration method of a conventional NR UE, in the present embodiment, on the basis of an original PRB offset (namely, the PRB offset $RB_{BWP}^{offset}$ configured in Table 2.1), an additional PRB offset is indicated by a newly-added signaling so as to avoid interference caused by the PUCCH transmission of the RedCap UE on the PUCCH transmission of the conventional NR UE, thereby realizing frequency division multiplexing of multiple types of UEs. Meanwhile, the RedCap UE may be instructed through the base station signaling to use only the PUCCH resource at the upper edge or lower edge of the bandwidth, thereby effectively alleviating the problem of PUSCH resource fragmentation.

In an exemplary embodiment, firstly, based on the common PUCCH resource set configuration Table 2.1 that is jointly maintained by the base station and the UE, the RedCap UE determines a common PUCCH resource set (each PUCCH resource set comprises 16 PUCCH resources) according to a PUCCH resource configuration index notified by the SIB 1, then determines a PUCCH resource with an index $r_{PUCCH}$ in the common PUCCH resource set by means of

$$r_{PUCCH} = \left\lfloor \frac{2 \cdot n_{CCE,0}}{N_{CCE}} \right\rfloor + 2 \cdot \Delta_{PRI}$$

combining DCI and CCE, wherein , $N_{CCE}$ is the number of CCEs contained in the PDCCH CORESET, $n_{CCE,0}$ is the index of a first CCE for the PDCCH reception, and $\Delta_{PRI}$ is a value of the PUCCH resource indicator field in the DCI.

Furthermore, a new field Additional_PRBoffset may be defined in the SIB or DCI, the field may represent an additional offset parameter, and the RedCap UE uses the common PUCCH resource set configuration Table 2.1 of the conventional NR UE by default when the field Additional _PRBoffset is not configured.

Furthermore, when the field Additional_PRBoffset is configured and occupies 1 bit, a value P thereof is selected from the set {4, 6} or {0, 4} or {0, 6} or {4, 2} or {6, 2} or {4, -2} or {6, -4}; when the field Additional_PRBoffset is configured and occupies 2 bits, its value $P$ is selected from the set {4, 6, 0, -4} or {4, 6, 2, -4} or {4, 6, 0, 2} or {4, 6, 8, 9} or {6, 8, 9, 10}. When the field Additional_PRBoffset is configured and occupies 3 bits, its value P is selected from the set {4, 6, 8, 9, 10, 2, -4, 0}. A case in which P takes a negative number is only with respect to the PUCCH resource set with the index 15 in Table 2.1, which means reducing the original PRB offset rather than newly adding an additional PRB offset. Alternatively, when the field Additional_PRBoffset is configured and occupies 1 bit, its value $P$ is fixed to a constant greater than zero.

Furthermore, on the basis of the embodiment of the present disclosure, the base station indicates through SIB or DCI signaling that the PUCCH resource of the RedCap UE is located at the lower edge of the uplink BWP, and then the RedCap UE determines a specific position of the PUCCH resource according to the indication of the signaling. Specifically, the PRB index of the RedCap UE PUCCH transmission is $RB_{BWP}^{offset'} + \lfloor r_{PUCCH} / N_{CS} \rfloor$ , and the initial cyclic shift index in the set of initial cyclic shift indexes is $r_{PUCCH} \bmod N_{CS}$. When the field Additional _PRBoffset is not configured, $RB_{BWP}^{offset'}$ is equal to the PRB offset $RB_{BWP}^{offset}$ configured in Table 2.1 or equal to $\kappa \cdot RB_{BWP}^{offset}$ (k is a fixed value greater than zero, preferably 2); when the field Additional PRBoffset is configured, $RB_{BWP}^{offset'} = RB_{BWP}^{offset} + \rho$ or $RB_{BWP}^{offset'} = \kappa \cdot RB_{BWP}^{offset} + \rho$ or $RB_{BWP}^{offset'} = RB_{BWP}^{offset} \cdot \rho$ or $RB_{BWP}^{offset'} = \kappa \cdot RB_{BWP}^{offset} \cdot \rho$ , where $\rho$ is a value of the configured Additional_PRBoffset, and $RB_{BWP}^{offset}$ is the PRB offset configured in Table 2.1.

Furthermore, on the basis of the embodiment of the present disclosure, the base station indicates through SIB or DCI signaling that the PUCCH resource of the RedCap UE is located at the upper edge of the uplink BWP, and then the RedCap UE determines a specific position of the PUCCH resource according to the indication of the signaling. Specifically, the PRB index of the RedCap UE PUCCH transmission is $N_{BWP}^{size} - 1 - RB_{BWP}^{offset'} - \lfloor r_{PUCCH} / N_{CS} \rfloor$ , and the initial cyclic shift index in the set of initial cyclic shift indexes is $r_{PUCCH} \bmod N_{CS}$. When the field Additional _PRBoffset is not configured, $RB_{BWP}^{offset'}$ is equal to the PRB offset $RB_{BWP}^{offset}$ configured in Table 2.1 or equal to $\kappa \cdot RB_{BWP}^{offset}$ (k is a fixed value greater than zero, preferably 2); when the field Additional PRBoffset is configured, $RB_{BWP}^{offset\,'} = RB_{BWP}^{offset} + \rho$ or

$RB_{BWP}^{offset\,'} = \kappa \cdot RB_{BWP}^{offset} + \rho$ or $RB_{BWP}^{offset\,'} = RB_{BWP}^{offset} \cdot \rho$ or $RB_{BWP}^{offset\,'} = \kappa \cdot RB_{BWP}^{offset} \cdot \rho$, where $\rho$ is a value of the configured Additional _PRBoffset, and $RB_{\mathrm{BWP}}^{\mathrm{offset}}$ is the PRB offset configured in Table 2.1.

Furthermore, on the basis of the embodiment of the present disclosure, the PUCCH resources of the RedCap UE are configured on a side of the bandwidth with a certain offset, and 16 PUCCH resources are distributed on the side. Furthermore, the RedCap UE may be instructed through the signaling, and all 16 PUCCH resources are specifically distributed at the upper edge or lower edge of the bandwidth, thereby alleviating the problem of PUSCH resource fragmentation. As compared with the PUCCH resource configuration method of a conventional NR UE, in the present embodiment, on the basis of an original PRB offset (namely, the PRB offset $RB_{BWP}^{offset}$ configured in Table 2.1), an additional PRB offset is indicated by a newly-added signaling so as to avoid interference caused by the PUCCH transmission of the RedCap UE on the PUCCH transmission of the conventional NR UE, thereby realizing frequency division multiplexing of multiple types of UEs.

In an exemplary embodiment, the base station and the RedCap UE jointly maintain a common PUCCH resource set configuration Table 2.2, which may be a resource set configuration table dedicated to the RedCap UE. The RedCap UE determines a common PUCCH resource set (each PUCCH resource set comprises 16 PUCCH resources) according to a PUCCH resource configuration index notified by the SIB 1, and then determines a PUCCH resource with an index $r_{\mathrm{PUCCH}}$ in the common PUCCH resource set by means of combining DCI and CCE, wherein $r_{\mathrm{PUCCH}} = \left\lfloor \frac{2 \cdot n_{\mathrm{CCE,o}}}{N_{\mathrm{CCE}}} \right\rfloor + 2 \cdot \Delta_{\mathrm{PRI}}$, $N_{\mathrm{CCE}}$ is the number of CCEs contained in the PDCCH CORESET, $n_{\mathrm{CCE,0}}$ is the index of a first CCE for the PDCCH reception, and $\Delta_{\mathrm{PRI}}$ is a value of the PUCCH resource indicator field in the DCI.

Furthermore, on the embodiment of the present disclosure, a new field Additional_PRBoffset may be defined in the SIB or DCI, and represents an additional offset parameter. The RedCap UE uses the common PUCCH resource set configuration Table 2.2 by default, when the field Additional_PRBoffset is not configured.

Furthermore, on the embodiment of the present disclosure, when the field Additional_PRBoffset is configured and occupies 1 bit, a value P thereof is selected from the set {4, 6} or {0, 4} or {0, 6} or {4, 2} or {6, 2} or {4, -4} or {6, -4}; when the field Additional_PRBoffset is configured and occupies 2 bits, its value P is selected from the set {4, 6, 0, -4} or {4, 6, 2, -4} or {4, 6, 0, 2}. A case in which P takes a negative number is only with respect to the PUCCH resource set with the index 15 in Table 2.2, which means reducing the original PRB offset rather than newly adding an additional PRB offset. Alternatively, when the field Additional_PRBoffset is configured and occupies 1 bit, its value P is fixed to a constant greater than zero. Table 2.2: a common PUCCH resource set configuration table of the RedCap UE in an initial access stage is as follows:

Table 2.2: a common PUCCH resource set configuration table of the RedCap UE in initial access stage

| Index | PUCCH format | First symbol | Number of symbols | PRB offset $RedCap\_RB_{BWP}^{offset}$ | Set of initial CS indexes |
|---|---|---|---|---|---|
| 0 | 0 | 12 | 2 | **0** | {0, 3} |
| 1 | 0 | 12 | 2 | **0** | {0, 4, 8} |
| 2 | 0 | 12 | 2 | **6** | {0, 4, 8} |
| 3 | 1 | 10 | 4 | **0** | {0, 6} |
| 4 | 1 | 10 | 4 | **0** | {0, 3, 6, 9} |
| 5 | 1 | 10 | 4 | **4** | {0, 3, 6, 9} |
| 6 | 1 | 10 | 4 | **8** | {0, 3, 6, 9} |
| 7 | 1 | 4 | 10 | **0** | {0, 6} |
| 8 | 1 | 4 | 10 | **0** | {0, 3, 6, 9} |
| 9 | 1 | 4 | 10 | **4** | {0, 3, 6, 9} |
| 10 | 1 | 4 | 10 | **8** | {0, 3, 6, 9} |

(continued)

| Index | PUCCH format | First symbol | Number of symbols | PRB offset $RedCap\_RB_{BWP}^{offset}$ | Set of initial CS indexes |
|-------|-------------|--------------|-------------------|----------------------------------------|---------------------------|
| 11 | 1 | 0 | 14 | **0** | {0, 6} |
| 12 | 1 | 0 | 14 | **0** | {0, 3, 6, 9} |
| 13 | 1 | 0 | 14 | **4** | {0, 3, 6, 9} |
| 14 | 1 | 0 | 14 | **8** | {0, 3, 6, 9} |
| 15 | 1 | 0 | 14 | $\lfloor N_{\text{BWP}}^{\text{size}}/4 \rfloor$ | {0, 3, 6, 9} |

Wherein the physical resource block offset PRB_offset used by the RedCap UE in Table 2.2 may be a linear processing result of the physical resource block offset in Table 2.1, the configuration table of the common PUCCH resource set used by the conventional NR UE. The linear processing may comprise multiplication or addition.

Furthermore, on the basis of the embodiment of the present disclosure, the base station indicates through SIB or DCI signaling that the PUCCH resource of the RedCap UE is located at the lower edge of the bandwidth BWP, and then the RedCap UE determines a specific position of the PUCCH resource according to the indication of the signaling. Specifically, an PRB index of the RedCap UE PUCCH transmission is $RB_{\text{BWP}}^{\text{offset}'} + \lfloor r_{\text{PUCCH}}/N_{CS} \rfloor$, and the initial cyclic shift index in the set of initial cyclic shift indexes is $r_{\text{PUCCH}} \bmod N_{CS}$. When the field Additional_PRBoffset is not configured, $RB_{\text{BWP}}^{\text{offset}'}$ is equal to the PRB offset $RedCap\_RB_{BWP}^{offset}$ configured in Table 2.2; when the field Additional_PRBoffset is configured,

$$RB_{BWP}^{offset'} = RedCap\_RB_{BWP}^{offset} + \rho \quad \text{or} \quad RB_{BWP}^{offset'} = RedCap\_RB_{BWP}^{offset} \cdot \rho$$

, where $\rho$ is a value of the configured Additional_PRBoffset, and $RedCap\_RB_{BWP}^{offset}$ is the PRB offset configured in Table 2.2.

Furthermore, on the basis of the embodiment of the present disclosure, the base station indicates through SIB or DCI signaling that the PUCCH resource of the RedCap UE is located at the upper edge of the uplink BWP, and then the RedCap UE determines a specific position of the PUCCH resource according to the indication of the signaling. Specifically, an PRB index of the RedCap UE PUCCH transmission is $N_{\text{BWP}}^{\text{size}} - 1 - RB_{\text{BWP}}^{\text{offset}'} - \lfloor r_{\text{PUCCH}}/N_{CS} \rfloor$, and the initial cyclic shift index in the set of initial cyclic shift indexes is $r_{\text{PUCCH}} \bmod N_{CS}$. When the field Additional _PRBoffset is not configured, $RB_{\text{BWP}}^{\text{offset}'}$ is equal to the PRB offset $RedCap\_RB_{BWP}^{offset}$ configured in Table 2.2; when the field Additional_PRBoffset is configured, $RB_{BWP}^{offset'} = RedCap\_RB_{BWP}^{offset} + \rho$ or $RB_{BWP}^{offset'} = RedCap\_RB_{BWP}^{offset} \cdot \rho$, where $\rho$ is a value of the configured Additional _PRBoffset, and $RedCap\_RB_{BWP}^{offset}$ is the PRB offset configured in Table 2.2.

Furthermore, on the basis of the embodiment of the present disclosure, the PUCCH resources of the RedCap UE are configured on a side of the bandwidth with a certain offset, and 16 PUCCH resources are distributed on the side. Furthermore, the base station instructs the RedCap UE through the signaling, and all 16 PUCCH resources are specifically distributed at the upper edge or lower edge of the bandwidth, thereby alleviating the problem of PUSCH resource fragmentation. In the present embodiment, a new RedCap dedicated PUCCH resource set configuration table 2.2 is defined and the table re-defines the original PRB offset (namely, the PRB offset $RedCap\_RB_{BWP}^{offset}$ configured in Table 2.2); on this basis, an additional PRB offset is indicated by a newly-added signaling so as to avoid interference caused by the PUCCH transmission of the RedCap UE on the PUCCH transmission of the conventional NR UE, thereby realizing frequency division multiplexing of multiple types of UEs.

In an exemplary embodiment, when a UE that enables PUCCH hopping and a UE that disables PUCCH hopping transmit PUCCHs on the same resource block, the sequences transmitted by the two types of UEs are non-orthogonal, thereby causing reduction of the network capacity. The base sequence and the cyclic shift may be further processed on the basis of the embodiment of the present disclosure to achieve code division multiplexing of different types of UEs, thereby improving multi-user multiplexing capability. Specifically, the low PAPR sequence transmitted on the PUCCH resource is represented as follows:

$$r_{u,v}^{(\alpha,\delta)}(n) = e^{j\alpha n}\overline{r}_{u,v}(n), \quad 0 \leq n < M_{ZC}$$

where, $M_{ZC}$ is a length of the transmission sequence, $u$ is a group number of the base sequence, v is a base sequence number within the group, $\alpha$ is the cyclic shift, $\overline{r}_{u,v}(n)$ is a base sequence relevant to $u$ and $v$, and the values thereof are determined by Section 5.2.2 of Standard Protocol TS38.211. Furthermore, $u$ and $v$ are parameters related to the frequency hopping index $n_{hop}$, and $\alpha$ is a parameter related to the initial cyclic shift $m_0$ in the common PUCCH resource set configuration table.

The conventional NR UE transmits the PUCCH resource by using a frequency hopping mode by default in the initial access stage, and in a first hop of PUCCH transmission of the conventional NR UE, a frequency hopping index parameter $n_{hop}$ in $u$ and v takes a value 0; in a second hop of PUCCH transmission of the conventional NR UE, the frequency hopping index parameter $n_{hop}$ in $u$ and v takes a value 1. When the RedCap UE disables the PUCCH frequency hopping in the initial access stage, the frequency hopping index parameter $n_{hop}$ in $u$ and v takes a fixed value 0. Therefore, the PUCCH base sequences transmitted by the RedCap UE and the conventional NR UE are not orthogonal, code division multiplexing cannot be realized. To this end, for RedCap msg4 PUCCH transmission, the present embodiment introduces a new signaling to indicate the value of a frequency hopping index parameter $n_{hop}$ so as to ensure orthogonality with the PUCCH transmission sequence of the conventional NR UE.

Furthermore, $N_{symb}^{PUCCH}$ time domain OFDM symbols of the PUCCH transmission may be divided into N sub-parts, respectively occupying the number of symbols

$$\left\lfloor N_{symb}^{PUCCH}/N \right\rfloor, \left\lfloor N_{symb}^{PUCCH}/N \right\rfloor \cdot 2, \cdots, \left\lfloor N_{symb}^{PUCCH}/N \right\rfloor \cdot (N-1), \ N_{symb}^{PUCCH} - \left\lfloor N_{symb}^{PUCCH}/N \right\rfloor, \text{ where N is preferably 2.}$$

For the previous $\left\lfloor N_{symb}^{PUCCH}/N \right\rfloor$ OFDM symbols in the PUCCH transmission, the value of the frequency hopping index parameter $n_{hop}$ in $u$ and v is fixed as 0; for the OFDM symbols in the last N-1 sub-parts in the PUCCH transmission, the value of the frequency hopping index parameter $n_{hop}$ in $u$ and v takes a value 0 or 1, and the specific value is indicated by base station signaling.

Furthermore, $N_{symb}^{PUCCH}$ time domain OFDM symbols of the PUCCH transmission may be divided into N sub-parts, respectively occupying the number of symbols

$$\left\lfloor N_{symb}^{PUCCH}/N \right\rfloor, \left\lfloor N_{symb}^{PUCCH}/N \right\rfloor \cdot 2, \cdots, \left\lfloor N_{symb}^{PUCCH}/N \right\rfloor \cdot (N-1), \ N_{symb}^{PUCCH} - \left\lfloor N_{symb}^{PUCCH}/N \right\rfloor, \text{ where N is preferably 2.}$$

For the previous $\left\lfloor N_{symb}^{PUCCH}/N \right\rfloor$ OFDM symbols in the PUCCH transmission, the value of the frequency hopping index parameter $n_{hop}$ in $u$ and v is fixed as 0; for the OFDM symbols in the last N-1 sub-parts in the PUCCH transmission, the value of the frequency hopping index parameter $n_{hop}$ in $u$ and v takes a fixed value 1.

Furthermore, $N_{symb}^{PUCCH}$ time domain OFDM symbols of the PUCCH transmission may be divided into N sub-parts, respectively occupying the number of symbols

$$\left\lfloor N_{symb}^{PUCCH}/N \right\rfloor, \left\lfloor N_{symb}^{PUCCH}/N \right\rfloor \cdot 2, \cdots, \left\lfloor N_{symb}^{PUCCH}/N \right\rfloor \cdot (N-1), \ N_{symb}^{PUCCH} - \left\lfloor N_{symb}^{PUCCH}/N \right\rfloor, \text{ where N is preferably 2.}$$

For the OFDM symbols in each sub-part, the value of the frequency hopping index parameter $n_{hop}$ in $u$ and v is 0 or 1 or indicated by the base station signaling.

In the case of PUCCH frequency hopping transmission, the PUCCH sequences of different UEs may be transmitted in different times under the same frequency domain resource, and the corresponding initial cyclic shifts are also different. For a RedCap UE without PUCCH frequency hopping, the initial cyclic shift corresponding to PUCCH transmission in different times under the same frequency domain resource is constant, and it is difficult to maintain orthogonality with the PUCCH transmission of multiple conventional NR UEs with different initial cyclic shifts simultaneously. To this end, the present embodiment proposes to divide OFDM symbols transmitted through the PUCCH of the RedCap UE into a plurality of sub-parts, respectively configured with different initial cyclic shifts so as to realize code division multiplexing with the conventional NR UE.

Furthermore, $N_{symb}^{PUCCH}$ time domain OFDM symbols of the PUCCH transmission may be divided into N sub-parts, respectively occupying the number of symbols

$$\left\lfloor N_{symb}^{PUCCH}/N \right\rfloor, \left\lfloor N_{symb}^{PUCCH}/N \right\rfloor \cdot 2, \cdots, \left\lfloor N_{symb}^{PUCCH}/N \right\rfloor \cdot (N-1), \ N_{symb}^{PUCCH} - \left\lfloor N_{symb}^{PUCCH}/N \right\rfloor$$ , where N is preferably 2.

For the previous $\left\lfloor N_{symb}^{PUCCH}/N \right\rfloor$ OFDM symbols in the PUCCH transmission, a value of an initial cyclic shift parameter $m_0$ in $\alpha$ is a value corresponding to an index $r_{PUCCH} \bmod N_{CS}$ or $(r_{PUCCH}-8) \bmod N_{CS}$ in an initial cyclic shift set, wherein $r_{PUCCH}$ represents a PUCCH resource index, and $N_{CS}$ represents the total number of indexes in the set of initial cyclic shift indexes in the common PUCCH resource set configuration table; for the OFDM symbols in the last N-1 sub-parts in the PUCCH transmission, the value of the initial cyclic shift parameter $m_0$ in $\alpha$ is a value corresponding to an index $r_{PUCCH} \bmod N_{CS}$ or $(r_{PUCCH}-8) \bmod N_{CS}$ or other indexes in the set of initial cyclic shift indexes, and the specific index value is indicated by the base station via signaling.

Furthermore, $N_{symb}^{PUCCH}$ time domain OFDM symbols of the PUCCH transmission may be divided into N sub-parts, respectively occupying the number of symbols

$$\left\lfloor N_{symb}^{PUCCH}/N \right\rfloor, \left\lfloor N_{symb}^{PUCCH}/N \right\rfloor \cdot 2, \cdots, \left\lfloor N_{symb}^{PUCCH}/N \right\rfloor \cdot (N-1), \ N_{symb}^{PUCCH} - \left\lfloor N_{symb}^{PUCCH}/N \right\rfloor$$ , where N is preferably 2.

For the OFDM symbols in each sub-part, a value of an initial cyclic shift parameter $m_0$ in $\alpha$ is a value corresponding to an index $r_{PUCCH} \bmod N_{CS}$ or $(r_{PUCCH}-8) \bmod N_{CS}$ or other indexes the initial cyclic shift set, and the specific index value is indicated by the base station via signaling.

With regard to PUCCH transmission of the RedCap UE, RRC signaling PUCCH-ConfigCommon is used for configuring PUCCH resource information in the initial access phase, wherein a scrambling identification parameter hoppingId, a power control parameter p0-nominal, a group frequency hopping parameter pucch-GroupHopping and a common PUCCH resource index parameter pucch-ResourceCommon may all be shared with the conventional NR UE or configured separately so as to achieve the requirements such as frequency division multiplexing or uplink coverage enhancement.

FIG. 3 is a schematic structural diagram of a resource configuration apparatus according to an embodiment of the present disclosure, which may execute the method provided in any embodiment of the present disclosure, and has corresponding functional modules and beneficial effects for executing the method. The apparatus may be implemented by software and/or hardware, and specifically comprises: a position determining module 301, a resource set module 302 and a resource configuration module 303.

The position determining module 301 is configured to determine edge position information of a PUCCH resource according to base station signaling.

The resource set module 302 is configured to determine a common PUCCH resource set in a PUCCH resource set configuration table according to the edge position information and an SIB message.

The resource configuration module 303 is configured to determine the PUCCH resource according to the edge position information and a physical resource block offset that corresponds to the common PUCCH resource set.

In the embodiment of the present disclosure, the position determining module determines edge position information of a PUCCH resource according to base station signaling, the resource set module determines a common PUCCH resource set from a PUCCH resource set configuration table according to the edge position information and an SIB message, and the resource configuration module determines the PUCCH resource according to the edge position information and the physical resource block offset that corresponds to the common PUCCH resource set, thereby achieving PUCCH resource configuration of the RedCap UE, reducing the impact on the performance of the public network and improving the network capacity.

Furthermore, on the basis of the embodiment of the present disclosure, the base station signaling in the apparatus comprises at least one of the following: a remaining minimum system information SIB1, downlink control information DCI, and other system information.

Furthermore, on the basis of the embodiment of the present disclosure, the edge position information in the apparatus may comprise at least one of the following cases: an upper edge of an uplink BWP, a lower edge of the uplink BWP, both sides of the uplink BWP, or the upper edge of the uplink BWP, the lower edge of the uplink BWP, or one side of the uplink BWP, the both sides of the uplink BWP.

Furthermore, on the basis of the embodiment of the present disclosure, the PUCCH resource set configuration table in the apparatus comprises at least one of the following: a common PUCCH resource set configuration table of a conventional NR UE, or a dedicated PUCCH resource set configuration table.

Furthermore, on the basis of the embodiment of the present disclosure, the physical resource block offset included in the dedicated PUCCH resource set configuration table in the apparatus is in a linear relationship with the physical resource block offset of the common PUCCH resource set configuration table of the conventional NR UE.

Furthermore, on the basis of the embodiment of the present disclosure, the apparatus further comprises an offset parameter module configured to determine a configured additional offset parameter according to the edge position information and/or the base station signaling, and determine the physical resource block offset according to the additional offset parameter.

Furthermore, on the basis of the embodiment of the present disclosure, the additional offset parameter in the offset parameter module is configured by a system information block SIB message or downlink control information DCI, the additional offset parameter adjusts the physical resource block offset based on an addition operation or a multiplication operation, and the number of bits occupied by the additional offset parameter comprises at least one of: 1 bit, 2 bits or 3 bits.

Furthermore, on the basis of the embodiment of the present disclosure, OFDM symbols of the PUCCH resource comprises at least two parts, and a value of a frequency hopping index parameter of a PUCCH transmission sequence corresponding to the OFDM symbol of each of said parts comprises: 0, 1 or a signaling indication value.

Furthermore, on the basis of the embodiment of the present disclosure, the OFDM symbols of the PUCCH resource comprises at least two parts, and a value of an initial cyclic shift index of a PUCCH transmission sequence corresponding to the OFDM symbols of each of the parts comprises: $r_{PUCCH} \mathrm{mod} N_{CS}$, $(r_{PUCCH} - 8) \mathrm{mod} N_{CS}$ or a signaling indication value.

Furthermore, on the basis of the embodiment of the present disclosure, the PUCCH resource comprises at least one of the following: a common PUCCH resource, a PUCCH resource corresponding to an MSG4 message, or a PUCCH resource corresponding to an MSGB message.

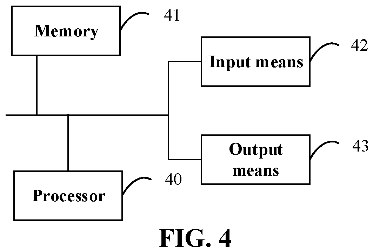

FIG. 4 is a block diagram of an electronic device according to an embodiment of the present disclosure. The electronic device comprises a processor 40, a memory 41, input means 42 and output means 43; the number of processors 40 in the electronic device may be one or more, and one processor 40 is taken as an example in FIG. 4; the processor 40, the memory 41, the input means 42 and the output means 43 in the electronic device may be connected via a bus or in other manners, and exemplarily connected via a bus in FIG. 4.

The memory 41, as a computer-readable storage medium, may be used for storing software programs, computer-executable programs and modules, such as modules corresponding to the means in the embodiment of the present disclosure (the position determining module 301, the resource set module 302 and the resource configuration module 303). The processor 40 implements the method described above by running software programs, instructions and modules stored in the memory 41 to perform various functional applications and data processing of the electronic device.

The memory 41 may mainly comprise a program storage area and a data storage area, wherein the program storage area may store an operating system and an application needed by at least one function; the storage data area may store data or the like created according to the use of the electronic device. In addition, memory 41 may comprise a high speed random access memory and may also include a non-volatile memory, such as at least one magnetic disk storage device, flash memory device, or other non-volatile solid state storage device. In some instances, the memory 41 may further comprise a memory remotely provided relative to the processor 40. These remote memories may be connected to the electronic device via a network. Examples of the above network include, but are not limited to, the Internet, intranets, local area networks, mobile communication networks, and combinations thereof.

The input means 42 is configured to receive entered numeric or character information and generate key signal input related to user setting and function control of the electronic device. The output means 43 may comprise a display device such as a display screen.

Embodiments of the present disclosure further provide a storage medium containing computer-executable instructions for performing a resource configuration method when executed by a computer processor, the method comprising:

determining edge position information of a PUCCH resource according to base station signaling;

determining a common PUCCH resource set in a PUCCH resource set configuration table according to the edge position information and an SIB message;

determining the PUCCH resource according to the edge position information and a physical resource block offset that corresponds to the common PUCCH resource set.

From the above description of embodiments, those skilled in the art may clearly understand that the present disclosure may be implemented by means of software and the necessary general-purpose hardware, but of course also by means of hardware, the former being a better embodiment in many cases. Based on such an understanding, the technical solution of the present disclosure, in essence or in part making contribution over the prior art, may be embodied in the form of a software product, and the computer software product may be stored in a computer-readable storage medium, such as a floppy disk, a Read-Only Memory (ROM), a Random Access Memory (RAM), a flash memory (FLASH), a hard disk or an optical disk, etc. of a computer, and comprises a plurality of instructions for causing a computer device (which may be a personal computer, a server, or a network device, etc.) to perform the method of the embodiments of the present disclosure.

It should be noted that in the embodiments of the above-mentioned device, various units and modules included are merely divided according to functional logic, but are not limited to the above-mentioned division, as long as corresponding functions can be achieved; in addition, the specific names of functional units are merely intended to facilitate distinguishing each other, and not to limit the scope of protection of the present disclosure.

It will be appreciated by those having ordinary skill in the art that all or some of the steps of the method, the system, the functional module/units in the apparatus may be implemented as software, firmware, hardware, and appropriate combinations thereof.

In a hardware implementation, the division between functional modules/units mentioned in the above description does not necessarily correspond to the division of physical components; for example, one physical component may have multiple functions, or one function or step may be performed by several physical components in cooperation. Some or all physical components may be implemented as software executed by a processor, such as a central processing unit, digital signal processor or microprocessor, or as hardware, or as an integrated circuit, such as an application specific integrated circuit. Such software may be distributed on a computer-readable medium, which may include a computer storage medium (or a non-transitory medium) and a communication medium (or a transitory medium). As is known to those having ordinary skill in the art, the term computer storage medium comprises both volatile and nonvolatile, removable and non-removable media implemented in any method or technology for storage of information such as computer readable instructions, data structures, program modules or other data. The computer storage medium includes, but is not limited to, RAM, ROM, EEPROM, flash memory or other memory technology, CD-ROM, digital versatile disk (DVD) or other optical disk storage, magnetic cartridge, magnetic tape, magnetic disk storage or other magnetic storage devices, or may be any other medium that is used to store desired information and accessed by a computer. In addition, as well known to those of ordinary skill in the art, communication media typically embodies computer readable instructions, data structures, program modules, or other data in a modulated data signal such as a carrier wave or other transport mechanism, and may include any information delivery media.

Several embodiments of the present disclosure have been described above with reference to the accompanying drawings, and are not intended to limit the protection scope of the present disclosure. Any modifications, equivalent substitutions and improvements made by those skilled in the art without departing from the scope and spirit of the present disclosure should all fall within the protection scope of the present disclosure.

## Claims

1. A resource configuration method, comprising:

   determining edge position information of a PUCCH resource according to a base station signaling;
   determining a common PUCCH resource set in a PUCCH resource set configuration table according to the edge position information and an SIB message;
   determining the PUCCH resource according to the edge position information and a physical resource block offset that corresponds to the common PUCCH resource set.

2. The method according to claim 1, wherein the base station signaling comprises at least one of the following: a remaining minimum system information SIB1, downlink control information DCI, and other system information .

3. The method according to claim 1, wherein the edge position information comprises at least one of the following cases: an upper edge of an uplink BWP, a lower edge of the uplink BWP, both sides of the uplink BWP, or an upper edge of an uplink BWP, a lower edge of an uplink BWP, or one side of an uplink BWP, the both sides of an uplink BWP.

4. The method according to claim 1, wherein the PUCCH resource set configuration table comprises at least one of the following: a common PUCCH resource set configuration table of a conventional NR UE, or a dedicated PUCCH resource set configuration table.

5. The method according to claim 4, wherein the physical resource block offset included in the dedicated PUCCH resource set configuration table is in a linear relationship with the physical resource block offset of the common PUCCH resource set configuration table of the conventional NR UE.

6. The method according to claim 1, further comprising:
determining a configured additional offset parameter according to the edge position information and/or the base station signaling, and determining the physical resource block offset according to the additional offset parameter.

7. The method according to claim 6, wherein the additional offset parameter is configured by a system information block SIB message or downlink control information DCI, the additional offset parameter adjusts the physical resource block offset based on an addition operation or a multiplication operation, and the number of bits occupied by the additional offset parameter comprises at least one of: 1 bit, 2 bits or 3 bits.

8. The method according to claim 1, wherein OFDM symbols of the PUCCH resource comprise at least two parts, and a value of a frequency hopping index parameter of a PUCCH transmission sequence corresponding to the OFDM symbols of each of said parts comprises: 0, 1 or a signaling indication value.

9. The method according to claim 1, wherein the OFDM symbols of the PUCCH resource comprise at least two parts, and a value of an initial cyclic shift index of a PUCCH transmission sequence corresponding to the OFDM symbol of each of said parts comprises: $r_{PUCCH}$ mod$N_{CS}$, $(r_{PUCCH} - 8)$mod $N_{CS}$ or a signaling indication value, wherein

$$r_{PUCCH} = \left\lfloor \frac{2 \cdot n_{CCE,0}}{N_{CCE}} \right\rfloor + 2$$

$\cdot \Delta_{PRI}$, $N_{CCE}$ is the number of control channel elements CCE contained in the PDCCH resource set, $n_{CCE,0}$ is an index of a first control channel element CCE for the PDCCH reception, $\Delta_{PRI}$ is a value of a PUCCH resource indicator field in the DCI, and $N_{CS}$ is the total number of initial cyclic shift indexes in the set of initial cyclic shift indexes.

10. The method according to claim 1, wherein the PUCCH resource comprises at least one of the following: a common PUCCH resource, a PUCCH resource corresponding to an MSG4 message, and a PUCCH resource corresponding to an MSGB message.

11. An electronic device, wherein the electronic device comprises:

   one or more processors;
   a memory for storing one or more programs;
   the one or more programs, when executed by the one or more processors, cause the one or more processors to perform the method according to any of claims 1-10.

12. A computer-readable storage medium having one or more programs stored thereon for execution by the one or more processors to perform the method according to any of claims 1-10.

| Determine edge position information of a PUCCH resource according to a base station signaling | 110 |

| Determine a common PUCCH resource set in a PUCCH resource set configuration table according to the edge position information and an SIB message | 120 |

| Determine the PUCCH resource according to the edge position information and a physical resource block offset that corresponds to the common PUCCH resource set | 130 |

**FIG. 1**

| Determine edge position information of a PUCCH resource according to a base station signaling | 210 |

| Determine a common PUCCH resource set in a PUCCH resource set configuration table according to the edge position information and an SIB message | 220 |

| Determine a configured additional offset parameter according to the edge position information and/or the base station signaling, and determine a physical resource block offset according to the additional offset parameter | 230 |

| Determine the PUCCH resource according to the edge position information and the physical resource block offset that corresponds to the common PUCCH resource set | 240 |

**FIG. 2**

| 301 | 302 | 303 |

| Position determining module | Resource set module | Resource configuration module |

**FIG. 3**

**FIG. 4**

## INTERNATIONAL SEARCH REPORT

| International application No. |
|---|
| **PCT/CN2022/100526** |

**A.    CLASSIFICATION OF SUBJECT MATTER**

H04W 72/04(2009.01)i

According to International Patent Classification (IPC) or to both national classification and IPC

**B.    FIELDS SEARCHED**

Minimum documentation searched (classification system followed by classification symbols)

H04W; H04L; H04B; H04Q; H04M

Documentation searched other than minimum documentation to the extent that such documents are included in the fields searched

Electronic data base consulted during the international search (name of data base and, where practicable, search terms used)

CNTXT, CNKI, 3GPP, WPABSC, ENTXTC: 上行链路, 信道, 边缘, 边界, 基站, 偏移, 资源, 碎片, PUCCH, side, edge, base, station, BS, resource, fragment, SIB, BWP

**C.    DOCUMENTS CONSIDERED TO BE RELEVANT**

| Category* | Citation of document, with indication, where appropriate, of the relevant passages | Relevant to claim No. |
|---|---|---|
| A | CN 113328841 A (NOKIA SOLUTIONS AND NETWORKS OY) 31 August 2021 (2021-08-31)<br>description, paragraphs 110-133, and figures 1-5 | 1-12 |
| A | CN 109495966 A (CHINA ACADEMY OF TELECOMMUNICATIONS TECHNOLOGY) 19 March 2019 (2019-03-19)<br>entire document | 1-12 |
| A | US 2021006383 A1 (FUJITSU LTD.) 07 January 2021 (2021-01-07)<br>entire document | 1-12 |
| A | WO 2019139936 A1 (QUALCOMM INCORPORATED) 18 July 2019 (2019-07-18)<br>entire document | 1-12 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 September 2022** | **21 September 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/100526**

| Patent document cited in search report | | | Publication date (day/month/year) | Patent family member(s) | | | Publication date (day/month/year) |
|---|---|---|---|---|---|---|---|
| CN | 113328841 | A | 31 August 2021 | PL | 3400670 | T3 | 04 April 2022 |
| | | | | CN | 113328842 | A | 31 August 2021 |
| | | | | WO | 2017118627 | A1 | 13 July 2017 |
| | | | | SG | 11201805839 Y | A | 30 August 2018 |
| | | | | EP | 4002746 | A1 | 25 May 2022 |
| | | | | US | 2019036653 | A1 | 31 January 2019 |
| | | | | CN | 108702279 | A | 23 October 2018 |
| | | | | ES | 2906767 | T3 | 20 April 2022 |
| | | | | PH | 12018501457 | A1 | 04 March 2019 |
| | | | | US | 2020382245 | A1 | 03 December 2020 |
| | | | | EP | 3400670 | A1 | 14 November 2018 |
| CN | 109495966 | A | 19 March 2019 | KR | 20200051792 | A | 13 May 2020 |
| | | | | EP | 3684122 | A1 | 22 July 2020 |
| | | | | TW | 201914342 | A | 01 April 2019 |
| | | | | WO | 2019047632 | A1 | 14 March 2019 |
| | | | | JP | 2020533901 | A | 19 November 2020 |
| | | | | US | 2020275419 | A1 | 27 August 2020 |
| US | 2021006383 | A1 | 07 January 2021 | JP | 2021517427 | A | 15 July 2021 |
| | | | | WO | 2019191873 | A1 | 10 October 2019 |
| WO | 2019139936 | A1 | 18 July 2019 | CN | 111602358 | A | 28 August 2020 |
| | | | | US | 2019223206 | A1 | 18 July 2019 |
| | | | | EP | 3741065 | A1 | 25 November 2020 |

**EP 4 462 907 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210062080